# EUROPEAN PATENT APPLICATION

(11) **EP 4 622 381 A1**
(43) Date of publication of application: **24.09.2025**
(21) Application number: 23891511.0
(22) Date of filing: 13.11.2023
(51) Int. Cl.: H04W 74/08

(54) **TERMINAL, WIRELESS COMMUNICATION METHOD, AND BASE STATION**

(30) Priority: 14.11.2022 JP 2022181915
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/040698
(87) International publication number: WO 2024/106364

(57) **Abstract**

A terminal according to one aspect of the present disclosure includes: a receiving section that receives a downlink control channel (PDCCH) order to be used for triggering a random access procedure, from a candidate cell; and a control section that determines a cell in which a random access channel (PRACH) is transmitted, based on the PDCCH order.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 17/5G or later), communication using a plurality of transmission/reception points (for example, multi-TRP (MTRP)) is controlled in a serving cell or communication is controlled based on inter-cell mobility with a plurality of cells including a non-serving cell.

In this case, it is also assumed to perform control of UL transmission (for example, perform a random access procedure (or configure timing advance)) for each transmission/reception point or for each serving cell and each non-serving cell. However, how a terminal (user terminal, User Equipment (UE)) control the UL transmission (for example, control of timing advance and the like) for a plurality of transmission/reception points (or non-serving cells) is a problem. Unless UL transmission to each transmission/reception point (or TRP in a serving cell/non-serving cell) is appropriately controlled, quality of communication using a plurality of transmission/reception points may degrade.

The present disclosure has been made in view of this respect, and an object of the present disclosure is to provide a terminal, a radio communication method, and a base station that enable appropriate communication even when communication is performed by using a plurality of transmission/reception points.

### Solution to Problem

A terminal according to one aspect of the present disclosure includes: a receiving section that receives a downlink control channel (PDCCH) order to be used for triggering a random access procedure, from a candidate cell; and a control section that determines a cell in which a random access channel (PRACH) is transmitted, based on the PDCCH order.

### Advantageous Effects of Invention

According to one aspect of the present disclosure, even when communication is performed by using a plurality of transmission points, communication can be appropriately controlled.

### Brief Description of Drawings

[FIG. 1] FIG. 1A to FIG. 1D are diagrams to show examples of multi-TRP.
[FIG. 2] FIG. 2A and FIG. 2B are diagrams to show examples of inter-cell mobility.
[FIG. 3] FIG. 3A and FIG. 3B are diagrams to show examples of switching between a serving cell and an additional cell by L1/L2 signaling.
[FIG. 4] FIG. 4 is a diagram to show an example of configuration examples 1 to 3 when candidate cells are supported.
[FIG. 5] FIG. 5A to FIG. 5C are diagrams to show respective examples of a case where switching with a candidate cell(s)/candidate cell group by L1/L2 signaling is performed in configuration examples 1 to 3 when candidate cells are supported.
[FIG. 6] FIG. 6 is a diagram to show an example of timing advance groups (TAGs) to which cells included in a cell group belong.
[FIG. 7] FIG. 7 is a diagram to show an example of a MAC CE for timing advance command.
[FIG. 8] FIG. 8A and FIG. 8B are diagrams to show examples of PDCCH monitoring timing according to a first embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Initial Access Procedure)

In an initial access procedure, a UE (RRC_IDLE mode) performs reception of an SS/PBCH block (SSB), transmission of Msg.1 (PRACH/random access preamble/preamble), reception of Msg.2 (PDCCH, PDSCH including a random access response (RAR)), transmission of Msg.3 (PUSCH scheduled by a RAR UL grant), and reception of Msg.4 (PDCCH, PDSCH including UE contention resolution identity). Subsequently, when an ACK for Msg.4 from a base station (network) is transmitted from the UE, RRC connection is established (RRC CONNECTED mode).

The reception of an SSB includes PSS detection, SSS detection, PBCH-DMRS detection, and PBCH reception. In the PSS detection, detection of part of a physical cell ID (PCI), detection (synchronization) of OFDM symbol timing, and (coarse) frequency synchronization are performed. The SSS detection includes detection of a physical cell ID. The PBCH-DMRS detection includes detection of (part of) an SSB index in a half radio frame (5 ms). The PBCH reception includes detection of a system frame number (SFN) and radio frame timing (SSB index), reception of configuration information for remaining minimum system information (RMSI, SIB1) reception, and recognition of whether the UE can camp in a corresponding cell (carrier).

An SSB has a band of 20 RBs and a time of four symbols. The transmission periodicity of the SSB can be configured from {5, 10, 20, 40, 80, 160} ms. In a half frame, a plurality of SSB symbol positions are defined based on a frequency range (FR1, FR2).

A PBCH has a payload of 56 bits. N repetitions of a PBCH are transmitted in periodicity of 80 ms. N depends on the SSB transmission periodicity.

System information includes an MIB carried by a PBCH, RMSI (SIB1), and other system information (OSI). SIB1 includes information for performing RACH configuration and a RACH procedure. The time/frequency resource relationship between an SSB and a PDCCH monitoring resource for SIB1 is configured by the PBCH.

The base station using beam correspondence transmits a plurality of SSBs by using a plurality of respective beams in every SSB transmission periodicity. The plurality of SSBs have a plurality of respective SSB indices. The UE that has detected one SSB transmits a PRACH in a RACH occasion associated with the SSB index of the SSB and receives a RAR in a RAR window.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. Each cell ID may be a physical cell ID (for example, a PCI) or may be a virtual cell ID.

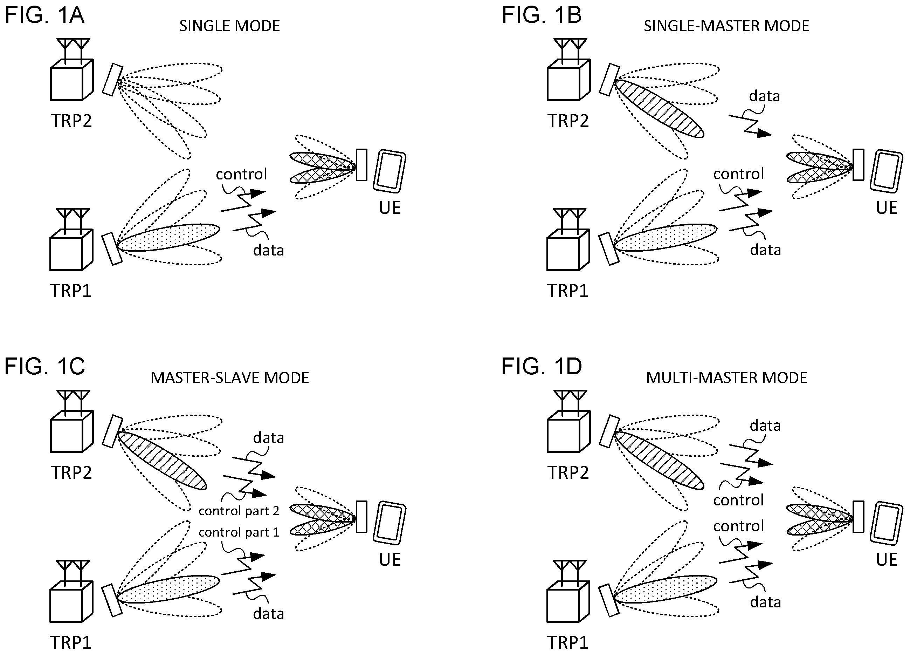

FIGS. 1A to 1D are diagrams to show examples of multi-TRP scenarios. It is assumed, in these examples, TRPs can transmit four respective different beams, but this is not restrictive.

FIG. 1A shows an example of a case where only one TRP (TRP1 in this example) of the multi-TRP performs transmission to a UE (which may be referred to as a single mode, a single TRP, and the like). In this case, TRP1 transmits both a control signal (PDCCH) and a data signal (PDSCH) to the UE.

In the present disclosure, a single-TRP mode may mean a mode where no multi-TRP (mode) is configured.

FIG. 1B shows an example of a case where only one TRP (TRP1 in this example) of the multi-TRP transmits a control signal to a UE and where the multi-TRP transmits data signals (which may be referred to as a single-master mode). The UE receives respective PDSCHs transmitted from the multi-TRP, based on one piece of downlink control information (DCI).

FIG. 1C shows an example of a case where the respective TRPs of the multi-TRP transmit parts of a control signal to a UE and where the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part **1.** The UE receives respective PDSCHs transmitted from the multi-TRP, based on these parts of the DCI.

FIG. 1D shows an example of a case where the respective TRPs of the multi-TRP transmit different control signals to a UE and where the multi-TRP transmits data signals (which may be referred to as a multi-master mode). TRP1 may transmit a first control signal (DCI), and TRP2 may transmit a second control signal (DCI). The UE receives respective PDSCHs transmitted from the multi-TRP, based on these pieces of DCI (these DCI).

When a plurality of PDSCHs from multi-TRP (which may be referred to as multi-PDSCH (multiple PDSCHs)) are scheduled by using one piece of DCI as in FIG. 1B, the DCI may be referred to as single DCI (S-DCI, single PDCCH). When a plurality of PDSCHs from multi-TRP are scheduled by using a plurality of pieces of DCI (a plurality of DCI) as in FIG. 1D, the plurality of pieces of DCI may be referred to as multi-DCI (M-DCI, multi-PDCCH (multiple PDCCHs)).

Each TRP of the multi-TRP may transmit a different transport block (TB)/codeword (Code Word (CW))/different layer. Alternatively, each TRP of the multi-TRP may transmit the same TB/CW/layer.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such multi-TRP scenarios, more flexible transmission control using a channel with high quality is possible.

NCJT using multi-TRP/panel has a possibility of using a high rank. To support ideal and non-ideal backhaul between a plurality of TRPs, both single DCI (single PDCCH, for example, FIG. 1B) and multi-DCI (multi-PDCCH, for example, FIG. 1D) may be supported. The maximum number of TRPs may be two for both single DCI and multi-DCI.

TCI enhancement is studied for single-PDCCH design (mainly for ideal backhaul). Each TCI codepoint in DCI may correspond to one or two TCI states. A TCI field size may be the same as that of Rel. 15.

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

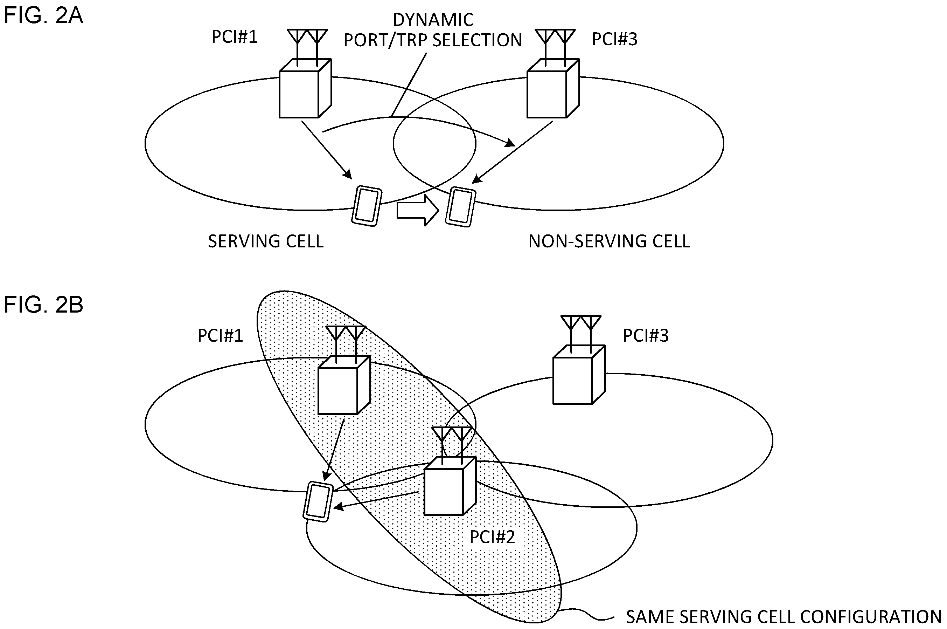

It is considered that a UE receives channels/signals from a plurality of cells/TRPs in inter-cell mobility (for example, L1/L2 inter cell mobility) (see FIGS. 2A and 2B).

FIG. 2A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP may be performed dynamically. The selection of a port (for example, an antenna port)/TRP may be performed based on a TCI state indicated or updated by DCI/MAC CE. Here, shown is a case of supporting configuration of different physical cell IDs (for example, PCIs) for cell #1 and cell #3.

FIG. 2B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be applied to/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (a plurality of respective DCI) (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" and "independent" may be interchangeably interpreted.

In inter-cell mobility, scenario 1 and scenario 2 below are conceivable. Note that, in the present disclosure, a serving cell may be interpreted as a TRP in a serving cell. Layer1/layer2 (L1/L2) and DCI/Medium Access Control control element (MAC CE) may be interchangeably interpreted. In the present disclosure, a physical cell ID (Physical Cell Identity (PCI)) different from the PCI of a current serving cell is referred to simply as a "different PCI." A non-serving cell, a cell having a different PCI, and an additional cell may be interchangeably interpreted.

### <Scenario 1>

Scenario 1 corresponds to multi-TRP inter-cell mobility, for example. Note that scenario 1 may be a scenario not corresponding to multi-TRP inter-cell mobility. In scenario 1, the following procedure is performed, for example.
(1) A UE receives, from a serving cell, a configuration of an SSB for beam measurement of a TRP corresponding to a PCI different from that of the serving cell and a configuration including the resource with the different PCI and being necessary for using radio resources for data transmission and reception.
(2) The UE performs beam measurement of the TRP corresponding to the different PCI and reports a beam measurement result to the serving cell.
(3) Based on the report, a transmission configuration indication (TCI) state associated with the TRP corresponding to the different PCI is activated by L1/L2 signaling from the serving cell.
(4) The UE uses a UE-dedicated channel on the TRP corresponding to the different PCI, for transmission and reception.
(5) The UE needs to constantly cover the serving cell, also in a case of multi-TRP. The UE needs to use common channels (broadcast control channel (BCCH), paging channel (PCH)) and the like from the serving cell, similarly to an existing system.

In scenario 1, when the UE transmits and receives signals to and from an additional cell/TRP (TRP corresponding to the PCI of the additional cell), the serving cell (assumption of the serving cell in the UE) is not changed. In other words, serving cell switching by L1/L2 is not supported. The UE is configured with a higher layer parameter related to the PCI of a non-serving cell, by the serving cell. Scenario 1 may be applied in Rel. 17, for example.

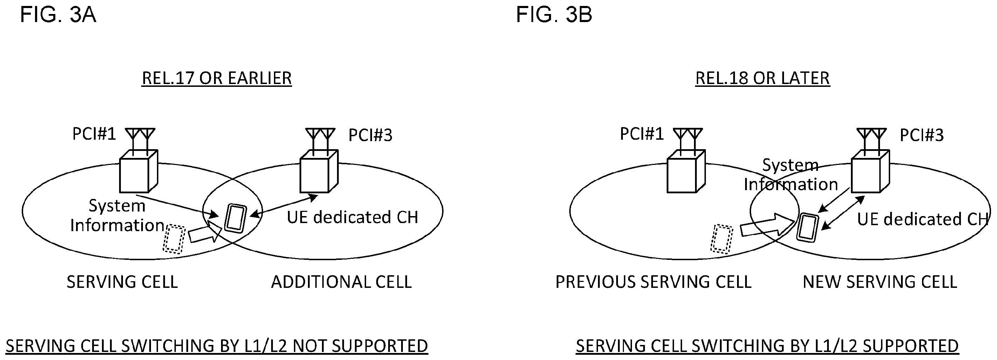

FIG. 3A is a diagram to show an example of move of a UE in Rel. 17. Assumed is a case where the UE moves from a cell with PCI #1 (serving cell) to a cell with PCI #3 (additional cell) (overlapping the serving cell). In this case, serving cell switching by L1/L2 is not supported in Rel. 17.

The additional cell is a cell with an additional PCI different from the PCI of the serving cell. The UE can receive/transmit a UE-dedicated channel from the additional cell. The UE needs to be present in the coverage of the serving cell to receive a UE-common channel (for example, system information/paging/short message). When the UE moves outside the coverage of the serving cell, cell switching by handover (also referred to as L3 mobility) or the like is needed.

### <Scenario 2>

Scenario 2 applies L1/L2 inter-cell mobility. In the L1/L2 inter-cell mobility, serving cell change is possible by using a function such as beam control without RRC reconfiguration. In other words, transmission and reception to and from an additional cell is possible without handover (or without performing the L3 mobility procedure). Since a data incommunicable period occurs due to the necessity of RRC reconnection and the like for handover, application of L1/L2 inter-cell mobility with no need of handover allows data communication to continue even at the time of serving cell change. In scenario 2, the following procedure is performed, for example.
(1) A UE receives, from a serving cell, a configuration of an SSB of a cell having a different PCI (additional cell), for beam measurement/serving cell change.
(2) The UE performs beam measurement of the cell using the different PCI and reports a measurement result to the serving cell.
(3) The UE may receive a configuration of the cell having the different PCI (serving cell configuration) by higher layer signaling (for example, RRC). In other words, pre-configuration related to the serving cell change may be performed. This configuration may be performed together with the configuration in (1) or may be performed separately.
(4) Based on the report, the TCI state of the cell having the different PCI may be activated by L1/L2 signaling according to the serving cell change. The activation of the TCI state and the serving cell change may be performed separately.
(5) The UE changes the serving cell (serving cell assumption) and initiate reception/transmission by using a UE-specific channel and a TCI state configured in advance.

In other words, in scenario 2, a serving cell (serving cell assumption in a UE) is updated by L1/L2 signaling. Scenario 2 may be applied in Rel. 18 or later versions.

FIG. 3B is a diagram to show an example of move of a UE in Rel. 18. In Rel. 18, a serving cell is switched by L1/L2. The UE can receive/transmit a UE-dedicated channel/common channel from/to a new serving cell. The UE may move outside the coverage of the previous serving cell.

### (Candidate Cell Configuration)

It is also assumed that, in L1/L2 inter-cell mobility, a candidate cell may be configured in addition to a serving cell. In the present disclosure, a candidate cell may be interpreted as a target cell, an additional cell, and an additional PCI. One or more candidate cells (or candidate cell groups) may be associated with each serving cell, or one or more candidate cells (or candidate cell groups) may be commonly associated a plurality of serving cells.

The candidate cells (or candidate cell groups) may be configured similarly to that in inter-cell beam management (inter-cell BM) for existing systems (for example, Rel. 17 or earlier versions) by using a certain higher layer parameter (for example, ServingCellConfig). Alternatively, for the configuration of the candidate cells (or candidate cell groups), a framework for carrier aggregation configuration (for example, CA configuration framework) or a framework for CHO (Conditional Handover)/CPC (Conditional PSCell Change) configuration may be reused.

For the candidate cells (or candidate cell groups) configured by the higher layer parameter, activation/deactivation may be indicated to a UE by a MAC CE/DCI.

As configuration of candidate cells (or association with serving cells), at least one of configuration example 1 to configuration example 3 below may employed, for example. Here, described are examples where SpCell #0, SCell #1, and SCell #2 are configured as serving cells and candidate cells/candidate cell groups are configured separately from the serving cells. Configuration example 1 to configuration example 3 below are examples, and the number of serving cells/number of candidate cells/number of candidate cell groups, association between serving cells and candidate cells, and the like are not limited to these and may be changed appropriately. Alternatively, another configuration example(s) may be supported/employed in addition to/instead of configuration example 1 to configuration example 3.

### {Configuration Example 1}

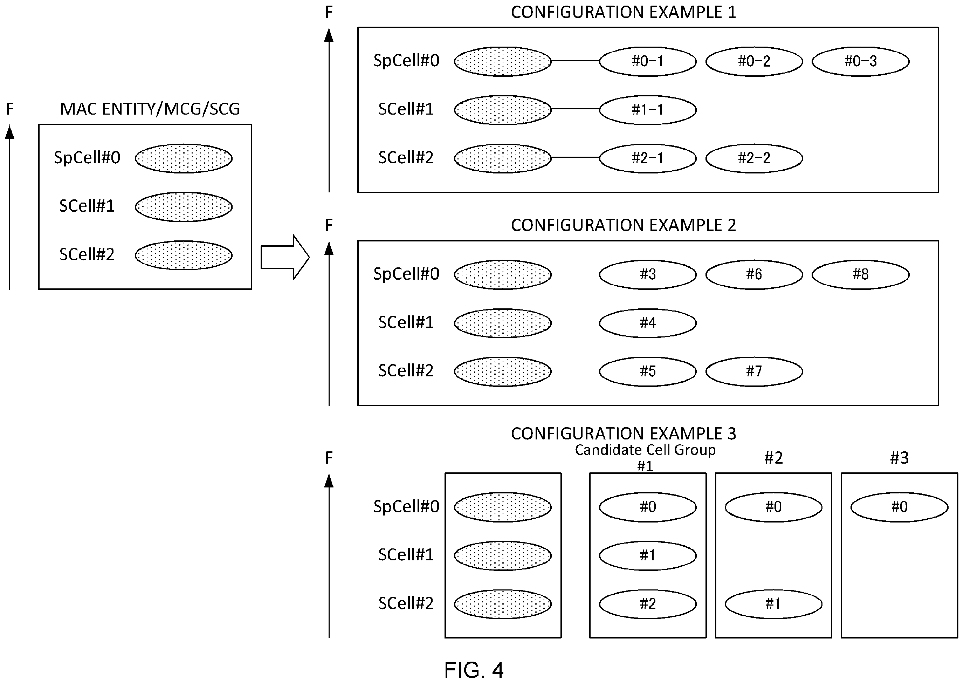

In configuration example 1, one or more candidate cells are associated with/configured for each serving cell (or the frequency domain corresponding to each serving cell) (see FIG. 4). Here, shown is a case where candidate cells #0-1, #0-2, and #0-3 are associated with SpCell #0 (or the frequency domain corresponding to SpCell #0), candidate cell #1-1 is associated with SCell #1 (or the frequency domain corresponding to SCell #1), and candidate cells #2-1 and #2-2 are associated with SCell #2 (or the frequency domain corresponding to SpCell#2). Information related to this association may be configured for/indicated to a UE by a base station by RRC/MAC CE/DCI.

### {Configuration Example 2}

In configuration example 2, candidate cells are associated with/configured for a MAC entity/MCG/SCG (see FIG. 4). Here, shown is a case where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information related to a candidate cell(s) configured for each cell may be configured for/indicated to a UE by a base station by RRC/MAC CE/DCI.

### {Configuration Example 3}

In configuration example 3, one or more candidate cell groups are configured (see FIG. 4). Each candidate cell group includes one or more candidate cells. Here, shown is a case where candidate cell group #1 including candidate cells #0 to #2, candidate cell group #2 including candidate cells #0 and #1, and candidate cell group #3 including candidate cell #0 are configured. At least one of information related to the configured candidate cell groups and information related to the candidate cell(s) included in each candidate cell group may be configured for/indicated to the UE by a base station by RRC/MAC CE/DCI.

### {Serving Cell Switching}

In existing systems (for example, Rel. 17), L1 beam indication related to a TCI state of an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It may be assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

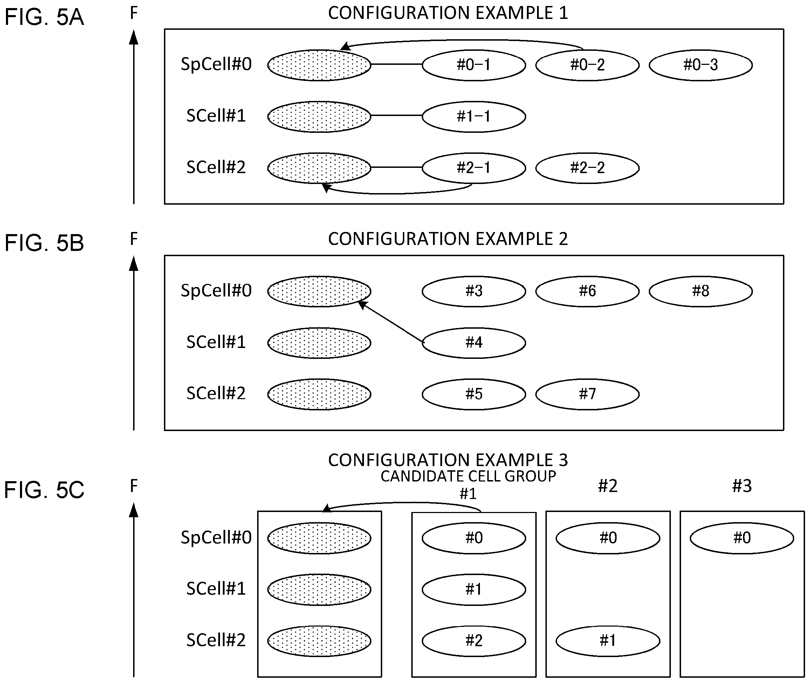

For example, in configuration example 1 of candidate cells, a certain candidate cell may be specified as a serving cell (or indicated for switching with a serving cell) via L1/L2 signaling. FIG. 5A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 5B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 5C shows a case where candidate cell group #1 (or candidate cells #0 to #2 included in candidate cell group #1) turns to be a serving cell group (or the serving cell group and candidate cell group #1 are switched) by L1/L2 signaling. Among the candidate cells included in candidate cell group #1 (here, candidate cells #0 to #2), the candidate cell associated with SpCell #0 or the candidate cell configured in the same frequency domain as that of SpCell #0 (here, candidate cell #0) may be configured as a new SpCell. Alternatively, a candidate cell to be an SpCell may be indicated by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG. A timing advance group including an SpCell of a MAC entity may be referred to as a primary timing advance group (PTAG), and a TAG other than the PTAG may be referred to as a secondary timing advance group (STAG).

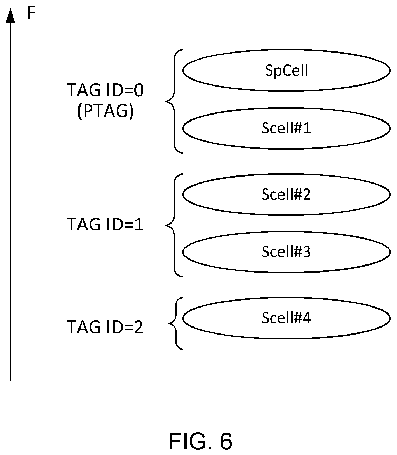

In existing systems (for example, Rel-16 NR), configuration of four TAGs at maximum (for example, MCG/SCG) is supported for each cell group (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

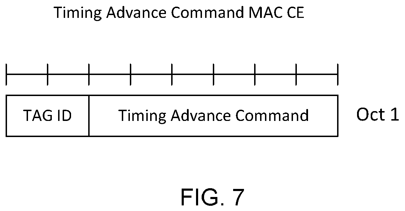

A MAC CE for timing advance command (TAC MAC CE) may have a structure including a field for timing advance group index (for example, TAG ID) and a field for timing advance command (see FIG. 7).

Meanwhile, a case is assumed that, in future radio communication systems, a different TAG (or TAG-ID) is configured for each of one or more TRPs corresponding to a certain cell (or CC). For example, it is assumed, for multi-TRP operation using multi-DCI, that two TAs (or TAGs) are supported for UL transmission.

Alternatively, a case is assumed that different TRPs corresponding to a certain cell share a common TAG. Alternatively, also assumed are a case where a MAC CE for TA command is applied only to one TRP or a case where a MAC CE for TA command is applied to a plurality of TRPs.

Alternatively, also assumed is a case that TRPs corresponding to respective different cells use different TAGs/share a common TAG. For example, it is also assumed that UL transmission is controlled based on a common/different timing advances for a serving cell (or a TRP of the serving cell) and a non-serving cell (or a TRP of the non-serving cell) in inter-cell mobility.

As described above, it is also assumed, in MIMO in Rel. 18 or later versions, that two timing advances (TAs) for two TRPs are supported in multi-TRP operation using multi-DCI.

When TAGs are configured/controlled in units of TRP, a time alignment timer (for example, timeAlignmentTimer) may be configured for each TRP. The time alignment timer may control the time regarded by a MAC entity that the serving cell belonging to the associated TAG is uplink time aligned. For example, a time alignment timer may be configured by RRC for maintenance of UL time alignment.

The time alignment timer (for example, timeAlignmentTimer) may be maintained for UL time alignment. In Rel. 17, a time alignment timer (for example, timeAlignmentTimer) corresponds to each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush (discard) all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush (discard) all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

### (TA Control in Units of TRP/Panel)

As described above, in a case of performing communication by using a plurality of transmission/reception points (for example, TRPs)/panels, it is also assumed to control timing advance (TA) for each TRP/each panel.

It is conceivable, in NR of Rel. 18 or later versions, that contention based random access (CBRA)/contention free random access (CFRA) is considered/determined in units of TRP or units of TRP TA (TA per TRP) for a RACH triggered by a PDCCH order or a RACH triggered by a UE.

When application/configuration of timing advance is supported for each TRP (or in units of TRP), a UE controls UL transmission (for example, RACH transmission or the like) in each TRP, based on the timing advance corresponding to each TRP (or timing advance group to which each TRP belongs).

Information related to the TRP corresponding to each serving cell (for example, a TRP index/TRP ID) may be configured for/indicated to a UE by a base station by using RRC/MAC CE/downlink control information. The UE may receive related information related to timing advance corresponding to each TRP (for example, information related to TA value/timing advance command/time alignment timer or the like).

Each embodiment of the present disclosure may be applied/supported in at least one of intra-cell multi-TRP (Intra-cell M-TRP) and inter-cell multi-TRP (Inter-cell M-TRP).

In intra-cell multi-TRP, a plurality of TRPs (or activated TCI states of the plurality of TRPs) may be associated with the same cell ID. The cell ID may be a physical cell ID (PCI).

In inter-cell multi-TRP, a plurality of TRPs (or activated TCI states of the plurality of TRPs) may be associated with different cell IDs (for example, PCIs). For example, in inter-cell multi-TRP, two TRPs may be interpreted as two TRPs associated with two respective PCIs.

When application/configuration of timing advance is supported for each TRP (or in units of TRP), each TRP may belong to a different TAG. A plurality of TRPs (for example, two TRPs) of a serving cell may belong to two respective TAGs. A TAG may include a plurality of TRPs from a plurality of serving cells. All TRPs/serving cells in a TAG apply/maintain the same timing advance (TA)/same time alignment timer.

In the present disclosure, one or more sub-TAGs may be included in a TAG. For example, two TRPs of a serving cell may belong to two respective sub-TAGs and also belong to one TAG. A sub-TAG may include a plurality of TRPs from a plurality of serving cells. All TRPs/serving cells in a sub-TAG apply/maintain the same timing advance (TA)/same time alignment timer.

For example, TA may be applied for each TRP (or indication in units of TRP TA may be performed). For example, at least one of options below may be employed.

### {Option 1}

A different TAG-ID may be configured for TRP, and a different MAC CE for TA command may be configured for each TRP. Each TAG may maintain a time alignment timer for UL time alignment.

### {Option 2}

Different TRPs may share a TAG. A MAC CE for TA command may be applied only to one TRP. A UE applies a different TA to another TRP. For example, the UE may adjust a TA value for another TRP (for example, TRP #1) by a TA offset (TA_TRP_offset), based on TA for TRP #0 (TA_TRP #0).

In this case, only one time alignment timer may be present for UL time alignment of a plurality of TRPs. This may mean that UL time alignment of a plurality of TRPs may be maintained or lost simultaneously.

### {Option 3}

There may be one TAG. A MAC CE for TA command may be applied to a plurality of serving TRPs for a UE.

### {Option 4}

There may be one TAG. A MAC CE for TA command received by a TRP/CW/PDSCH/DMRS port group may be applied to a TRP/CW/PDSCH/DMRS port group with the same TAG. Each TRP/CW/PDSCH/DMRS port group of the TAG may maintain a time alignment timer for UL time alignment.

As described above, it is also assumed, in Rel. 18 or later versions, that a plurality of timing advances are supported in multi-TRP (for example, multi-TRP using multi-DCI). For example, a plurality of (for example, two) timing advances may be supported for multi-TRP (for example, two TRPs) using multi-DCI. Application of a plurality of timing advances for multi-TRP may be supported in an intra-cell/inter-cell multi-DCI multi-TRP scenario or may be supported in a plurality of frequency ranges (for example, FR1 and FR2).

### (PDCCH Order)

DCI format 1_0 includes an identifier field for DCI format, a bit field always set at 1, and a frequency domain resource assignment field. When cyclic redundancy check (CRC) in DCI format 1_0 is scrambled with a C-RNTI and the frequency domain resource assignment field is all set at 1, this DCI format 1_0 is for a random access procedure initiated by a PDCCH order, and the remaining fields are a random access preamble, a UL/supplementary Uplink (SUL) indicator, an SS/PBCH index (SSB index), a PRACH mask index, and reserved bits (12 bits).

In a case of PRACH transmission triggered by a PDCCH order, when the value of a random access preamble index field is not zero, a PRACH mask index field indicates that a PRACH occasion is a PRACH occasion of PRACH transmission associated with an SS/PBCH block index indicated by an SS/PBCH block index field of the PDCCH order.

### (RACH Procedure Using PDCCH Order as Trigger)

In an existing system (for example, Rel. 17 or previous versions), for a RACH procedure for a specific cell (for example, an SpCell), a UE performs a RACH procedure for a RACH of a PDCCH order by assuming that a PDCCH order and a PDCCH for RAR have the same QCL properties. The PDCCH for RAR may be a PDCCH transmitted by a base station in response to a PRACH triggered by the UE (or transmitted from the UE) according to the PDCCH order. The PDSCH scheduled by the PDCCH for RAR may include a RAR. The QCL properties may be interpreted as DMRS QCL properties.

Specifically, when the UE performs detection of DCI format 1_0 CRC-scrambled with a corresponding RA-RNTI in response to PRACH transmission initiated by a PDCCH order triggering a CFRA procedure for an SpCell, the UE may assume that the PDCCH including DCI format 1_0 and the PDCCH order have the same DMRS antenna port quasi-co-location properties.

Note that the QCL of a CORESET in which a RAR is transmitted in RAR monitoring not triggered by a PDCCH order may be the same as that of an SSB/CSI-RS used for a PRACH.

In an existing system (for example, Rel. 17 or earlier versions), there is no restriction for a RACH procedure for another cell (for example, an SCell) as that for a specific cell, and a UE using QCL of a certain CORESET for reception of a PDCCH for RAR is supported. The certain CORESET may be a CORESET associated with Type 1 CSS set (for example, Type 1-PDCCH CSS set).

Specifically, when the UE performs detection of DCI format 1_0 CRC-scrambled with a corresponding RA-RNTI in response to PRACH transmission initiated by a PDDCCH order triggering a CFRA procedure for an SCell, the UE may assume DMRS antenna port quasi-co-location properties of the CORESET associated with a Type 1-PDCCH CSS set for reception of a PDCCH including DCI format 1_0.

As described above, in RAR monitoring for a RACH of a PDCCH order for an SCell, the QCL of a CORESET for RAR may be associated with a Type 1-PDCCH CSS set.

To acquire TA for each TRP (or TAs of a serving cell and a non-serving cell), a RACH for each TRP (or each serving cell/non-serving cell) may be triggered. A case is also conceivable where, for a PDCCH order triggering a RACH procedure to a TRP (or a serving cell/non-serving cell), a PDCCH order and a PDCCH for RAR are transmitted from different TRPs. In such a case, the restriction that a PDCCH order and a PDCCH for RAR have the same DMRS QCL properties needs to be eased/changed.

For example, it may be supported that a PDCCH order from TRP #1 triggers a RACH to TRP #2 and a RAR is transmitted from TRP #2. In this case, triggering of a RACH to any TRP via a PDCCH order from any TRP is possible, which can increase flexibility of a RACH procedure.

As another example, it may be supported that a PDCCH order from TRP #2 triggers a RACH to TRP #2 and a RAR is transmitted from TRP #1. This example may occur in a case of inter-cell multi-TRP (for example, inter-cell M-TRP) when a UE fails to receive a Type 1 CSS set from a TRP of a non-serving cell.

### (Random Access Procedure in MAC Entity)

A random access procedure is initiated by a PDCCH order, a MAC entity itself, or RRC for an event conforming to a specification. In the MAC entity, there is only one random access procedure in progress at any time point. A random access procedure of an SCell is initiated only by a PDCCH order with ra-PreambleIndex different from 0b000000.

When a random access procedure is initiated on a serving cell, a MAC entity performs the following.
- When the random access procedure is initiated by a PDCCH order and ra-PreambleIndex explicitly provided by a PDCCH is not 0b000000 or when a random access procedure is initiated for reconfiguration with synchronization and a 4-step RA type contention free random access resource is explicitly provided by rach-ConfigDedicated for a BWP selected for the random access procedure, the MAC entity configures RA TYPE as 4-stepRA.

When selected RA TYPE is configured at 4-stepRA, the MAC entity performs the following.
- When ra-PreambleIndex is explicitly provided by the PDCCH and ra-PreambleIndex is not 0b000000, the MAX entity sets PREAMBLE_INDEX at notified ra-PreambleIndex and selects an SSB notified by the PDCCH.
- When the SSB is selected as described above, the MAC entity determines a PRACH occasion available next from PRACH occasions permitted by a restriction given by ra-ssb-OccasionMaskIndex and corresponding to the selected SSB (the MAC entity randomly selects a PRACH occasion at an equal probability from consecutive PRACH occasions according to the selected SSB in accordance with a specification; when the MAC entity determines a next available PRACH occasion corresponding to the selected SSB, the MAC entity may consider the possibility of occurrence of a measurement gap).

For example, when a new random access procedure is initiated while another random access procedure is already in progress in a MAC entity, whether to continue the procedure in progress or initiate the new procedure (SI request or the like) depends on UE implementation.

When there is a random access procedure in progress triggered by a given PDCCH order while the UE receives another PDCCH order indicating the same random access preamble, PRACH mask index, and UL carrier, the procedure is regarded as the same random access procedure and is not reinitialized.

### (Contention Resolution)

When Msg3 is transmitted, a MAC entity follows operations 1 to 4 below.
{Operation 1} If Msg3 is transmitted in a non-ground network, the MAC entity starts ra-ContentionResolutionTimer to restart the timer in each HARQ retransmission in the first symbol after UE estimation of UE-gNB RTT being added to the end of Msg3.
{Operation 2} Instead of the above, if Msg3 transmission (first transmission or HARQ retransmission) is scheduled with Type A PUSCH repetition, the MAC entity starts or restarts ra-ContentionResolutionTimer in the first symbol after the end of all the repetitions of the Msg3 transmission.
{Operation 3} In a case other than the above, the MAC entity starts or restarts ra-ContentionResolutionTimer in the first symbol after the end of the Msg3 transmission.
{Operation 4} While ra-ContentionResolutionTimer is in operation, the MAC entity monitors PDCCHs irrespective of the possibility of occurrence of a measurement gap.

Step 4 (Msg4) in a Rel-16 NR RA procedure follows the following step 4 operation.

### {Step 4 operation}

When no C-RNTI is provided to a UE, the UE attempts to detect DCI format 1_0 for scheduling a PDSCH including a UE contention resolution identity with CRC scrambled with a corresponding TCI-RNTI, in response to PUSCH transmission scheduled by a RAR UL grant. In response to reception of the PDSCH including UE contention resolution identity, the UE transmits HARQ-ACK information in a PUCCH. PUCCH transmission is in the same active UL BWP as that of PUSCH transmission. A minimum time between the last symbol of PDSCH reception and the first symbol of corresponding PUCCH transmission including HARQ-ACK information is equal to N_T, 1 [msec]. N_T, 1 denotes a duration of N_T, 1 symbol(s) corresponding to a PDSCH processing time with UE processing capability 1 when an additional PDSCH DM-RS is configured. The UE assumes N_T, 1 = 14 for µ = 0.

When a DCI format is detected in response to PUSCH transmission scheduled by a RAR UL grant or in response to corresponding PUSCH retransmission scheduled by DCI format 0_0 with CRC scrambled with a TC-RNTI provided to a corresponding RAR message, the UE may assume, irrespective of whether or not the UE is provided with a TCI state for a CORESET in which the PDCCH with the DCI format is received, that the PDCCH transmitting the DCI format has the same DM-RS antenna port quasi co-location (QCL) properties as the DM-RS antenna port QCL properties for an SS/PBCH block used for PRACH association by the UE.

When CA is configured, the first three steps of CBRA may always occur in a PCell in a 4-step RA type random access procedure. In this case, contention resolution (step 4) may be cross-scheduled by the PCell. Three steps of CFRA initiated in a PCell remain on the PCell. CFRA in an SCell may be initiated only by a gNB to establish timing advance of an STAG. This procedure may be initiated by the gNB by a PDCCH order (step 0) transmitted in a scheduling cell for an SCell activated in the STAG. Preamble transmission (step 1) may be performed in an indicated SCell. RAR (step 2) may be performed in a PCell. As described above, in an existing system, a PDCCH order is transmitted in an active Scell in a RACH procedure in an Scell.

### (Activation/deactivation of SCell)

When one or more SCells are configured for a MAC entity, a network (NW) can activate/deactivate the configured Scells. After an SCell is configured, the SCell remains deactivated as long as a parameter (sCellState) is configured to be activated for the SCell by a higher layer.

One or a plurality of configured SCells may be activated/deactivated based on at least one of the following conditions:
- SCell Activation/Deactivation MAC CE is received.
- enhanced SCell Activation/Deactivation MAC CE is received.
- timer (sCellDeactivationTimer) is configured for each SCell (excluding an SCell for which a PUCCH is configured). Note that the related SCell is deactivated when the timer expires.
- sCellState is configured for each configured SCell. In this case, the related SCell is activated based on the configuration of the SCell.

When an SCell is deactivated, the UE may perform/assume the following operations:
- transmit no SRS in the SCell
- report no CSI in the SCell
- transmit no UL-SCH in the SCell
- transmit no RACH in the SCell
- monitor no PDCCH in the SCell
- monitor no PDCCH for the SCell
- transmit no PUCCH in the SCell

HARQ feedback for a MAC Protocol Data Unit (PDU) including an SCell Activation/Deactivation MAC CE or an Enhanced SCell Activation/Deactivation MAC CE is not affected by suspension of a PCell/PSCell/PUCCH-SCell attributable to activation/deactivation of an Scell. Meanwhile, if there is a random access procedure in progress in an SCell when the SCell is deactivated, the random access procedure is suspended.

### (Time between PDCCH Order Reception and PRACH Transmission)

If a random access procedure is initiated by a PDCCH order, a UE transmits, if requested by a higher layer, a PRACH in a selected PRACH occasion for a case where the time between the last symbol of PDCCH order reception and the first symbol of PRACH transmission is equal to or longer than N_(T, 2) + Δ_BWPSwitching + Δ_Delay + T_switch [msec] (time condition), as described in a specification. Here, N_(T, 2) denotes a duration of N_2 symbol(s) corresponding to a PUSCH preparation time with UE processing capability 1. µ corresponds to an SCS configuration for PRACH transmission. For example, µ is assumed to correspond to the minimum SCS configuration between the subcarrier spacing (SCS) configuration of the PDCCH order and the SCS configuration of the corresponding PRACH transmission. When an active UL BWP does not change, Δ_BWPSwitching = 0 holds, and Δ_BWPSwitching is defined in a specification otherwise. In FR1, Δ_delay = 0.5 msec holds, and in FR2, Δ_delay = 0.25 msec holds. T_switch denotes a switching gap duration defined in a specification.

When the UE is provided with K_{cell,offset} by CellSpecific_Koffset, the PRACH occasion is after slot (n + 2^{u} · K_{cell,offset}). Here, n denotes the slot of the UL BWP of PRACH transmission overlapping the end of the reception of the PDCCH order when T_{TA} = 0 is assumed. µ corresponds to an SCS configuration for PRACH transmission. When the PDCCH reception for the PDCCH order includes two PDCCH candidates from two search space sets linked based on searchSpaceLinkingId, the last symbol of the PDCCH reception is the last symbol of the PDCCH candidate that ends later. When the UE does not need to monitor any of the two PDCCH candidates, PDCCH reception includes the two PDCCH candidates.

When the UE attempts to detect DCI format 1_0 with CRC scrambled with a corresponding RA-RNTI in response to PRACH transmission initiated by a PDCCH order triggering a CFRA procedure for an SpCell, the UE may assume that the PDCCH including DCI format 1_0 and the PDCCH order have the same DM-RS antenna port QCL properties.

When the UE attempts to detect DCI format 1_0 with CRC scrambled with a corresponding RA-RNTI in response to PRACH transmission initiated by a PDDCCH order triggering a CFRA procedure for an SCell, the UE may assume DMRS antenna port QCL properties of the CORESET associated with a Type 1-PDCCH CSS set for reception of a PDCCH including DCI format 1_0.

As described above, the timing of a PRACH occasion relates to µ and CellSpecific_Koffset.

### (RACH Procedure for Non-serving Cell for L1/L2 Centric Inter-cell Mobility)

When RRC configures one or more pieces of non-serving cell information (one or more non-serving cell information) for a UE, the RACH configuration of the non-serving cell (which may be more than one) may be included. As examples of a case of supporting a RACH for a candidate cell using a PDCCH order as a trigger, options 1 to 3 below are given.

### <Option 1>

The UE may determine a cell to which the PDCCH order (or a PRACH transmitted in accordance with the PDCCH order) corresponds, based on a certain parameter used by the PDCCH of the PDCCH order. The certain parameter may be a TCI state, for example.

For example, when a base station transmits a PDCCH order for PRACH and a PDCCH (or DCI/CORESET) is associated with a TCI state from a non-serving cell, the PRACH requested by the PDCCH order may correspond to the non-serving cell. In this case, the UE may control PRACH transmission, based on the PRACH configuration of the non-serving cell. Subsequently, the UE may determine TA of the non-serving cell, based on DL transmission (for example, RAR) fed back in response to the PRACH transmission.

When a PDCCH (or DCI/CORESET) is associated with a TCI state from a serving cell, the PRACH requested by the PDCCH order may correspond to a serving cell. In this case, the UE may control PRACH transmission, based on the PRACH configuration of the serving cell. Subsequently, the UE may determine TA of the serving cell, based on DL transmission (for example, RAR) fed back in response to the PRACH transmission.

### <Option 2>

The UE may determine a cell to which the PDCCH order (or a PRACH transmitted in accordance with the PDCCH order) corresponds, based on DCI (or CORESET) used by the PDCCH order.

For example, the UE may be notified of identification information (for example, a cell index/cell type (for example, serving cell/non-serving cell)) of a cell to which the PRACH corresponds, included in the DCI used by the PDCCH order. In a certain DCI format (for example, DCI format 1_0) used by the PDCCH order, X reserved bit(s) of DCI may be used for notification of the cell to explicitly indicate the serving cell/non-serving cell to which the PRACH corresponds. The reserved bit(s) may be a reserved bit(s) included in DCI format 1_0 in an existing system (for example, Rel. 15/16).

The bit size of X may be configured/determined/decided based on the number of configured non-serving cells. For example, when one non-serving cell is configured, X may be 1 bit. In this case, '0' may indicate serving cell, and '1' may indicate non-serving cell. The most significant bit (MSB) or the least significant bit (LSB) of reserved bits may be applied to a field used for notification of identification information of a cell.

When three non-serving cells are configured, X may be 2 bits. To indicate the non-serving cells, the indices of the non-serving cells re-indexed may be applied. Association between a cell index and a bit value (or a codepoint) may be defined in a specification or may be configured by higher layer signaling or the like. For example, the codepoint '0' or '00' may indicate a serving cell, and the remaining bit may be associated with the order (for example, ascending order/descending order) of indices of the configured non-serving cells.

Alternatively, the size of X may be fixed so that the number of bits does not change irrespective of the number of configured non-serving cells. In this case, a bit(s)/field(s) not used may be configured as a reserved bit(s).

### <Option 3>

When a random access preamble index (for example, ra-PreambleIndex) is a certain value (for example, 0 to 63), part of the preamble may be configured/activated by RRC/MAC CE to be related to a non-serving cell(s).

In this case, information of serving cell/non-serving cell may be indicated by a certain field of a certain DCI format (for example, DCI format 1_0). The certain field may be a random access preamble index field, for example. Note that a preamble configuration related to a non-serving cell(s) may be configured to be applied only to PRACH transmission based on a PDCCH order (configured not to be applied to contention based PRACH transmission).

When a preamble related to a non-serving cell is indicated by DCI, the UE may perform control to perform PRACH transmission with the indicated preamble in accordance with the RACH configuration of the non-serving cell.

The UE may adjust a TA(s) of one or more indicated cells after the PRACH based on the PDCCH order. Information related to TA may be received using a response signal (for example, RAR) corresponding to PRACH transmission.

### (RACH Procedure for Each TRP in Multi-TRP)

Sufficient study is not performed about how to perform a RACH procedure in a RACH procedure for each TRP (or TRP TA) in multi-TRP as that described above.

For example, it is not clear, in a RACH procedure for a candidate cell using a PDCCH order as a trigger, in which cell a PDCCH order of the candidate cell is transmitted. The candidate cell is not limited to an SpCell/PCell, and an SCell may also be a candidate cell.

It is not clear how to perform transmission of a PDCCH order in a case of a non-active (deactivated) cell/deactivated candidate cell, for example. Note that, in an existing system, a UE does not perform PDCCH monitoring in a deactivated cell.

When a PDCCH order is transmitted in each cell, a UE needs to monitor PDCCHs of a plurality of candidate cells (at least for a PDCCH order). Moreover, there is a possibility that the UE does not know for which candidate cells the UE is to monitor PDCCH orders.

Although an NW can transmit two PDCCH orders to two cells for a PRACH, indication of a preamble/mask (PRACH mask index)/UL carrier is the same (common), and hence an existing rule is not appropriate (cannot be applied). For example, in a case where there is a random access procedure in progress triggered by a given PDCCH order, even when the UE receives another PDCCH order indicating the same random access preamble/PRACH mask index/UL carrier, the procedure is regarded as the same random access procedure as that in progress and is not reinitialized.

### <Option 1>

A PDCCH order transmitted on given cell #A to a UE may trigger a PRACH on this cell #A. For example, when an NW desires to trigger a RACH on candidate cell #A, the NW needs to send a PDCCH order on candidate cell #A.

In the present disclosure, cells #A and #B are candidate cells and may each be any of an SpCell/PCell/SCell unless otherwise stated.

### {Option 1-1}

An NW may support PDCCH order transmission/PDCCH monitoring/PRACH transmission on a non-active (deactivated) cell/deactivated candidate cell. In this case, the NW does not need to indicate the ID of a candidate cell to a UE, to trigger a RACH.

### {Option 1-2}

A UE may determine whether a PDCCH needs to be monitored/a candidate cell which should be monitored, based on at least one of the following options.

### {Option 1-2-1}

The NW may configure a candidate cell for which the UE needs to monitor a PDCCH (at least including a PDCCH order/DCI format 1_0)/TAG(s)/reference CC per TAG/candidate cell(s) per TAG, by RRC/MAC CE. The UE may determine a candidate cell necessary to monitor/TAG(s)/reference CC per TAG/candidate cell(s) per TAG, based on RRC/MAC CE. A candidate cell may include a deactivated SCell.

For a candidate cell (including a deactivated SCell)/TAG(s)/reference CC per TAG indicated to the NW, the UE may monitor a PDCCH order. For other candidate cells, the UE does not need to monitor a PDCCH order. Here, a reference CC per TAG may mean that the NW/UE only needs to acquire a TA based on this reference CC for all the cells in the TAG.

### {Option 1-2-2}

A PDCCH order transmitted on given cell #A to the UE may trigger a PRACH on cell #B different from this cell #A (details will be described later in a second embodiment).

### {Option 1-2-3}

The UE may determine a candidate cell for which a PDCCH needs to be monitored, based on a given (certain) rule. The certain rule may indicate at least one of the following:
- candidate cell for which L1 beam measurement/reporting is configured
- candidate cell for which an active TCI state/TRS/CSI measurement/reporting is configured
- candidate cell (per TAG) with the lowest cell ID among the above candidate cells

In this case, the UE only needs to determine one candidate cell for which PDCCH monitoring should be performed, per TAG.

### {Variations}

In options 1-1 and 1-2, a UE monitors a specific DCI format (for example, DCI format 1_0 with CRC scrambled with a corresponding RA-RNTI/C-RNTI) in a candidate cell (deactivated cell/configured cell). This can reduce the number of BDs to reduce UE load. However, this is not restrictive. For example, the UE may monitor any DCI format scrambled with any RNTI.

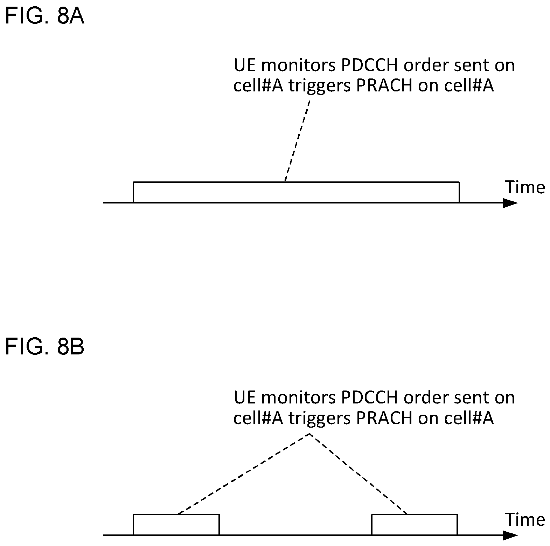

FIG. 8A and FIG. 8B are diagrams to show examples of PDCCH monitoring timing according to option 1. A UE may receive a PDCCH order sent on cell #A at timing shown in either FIG. 8A or FIG. 8B.

For example, as shown in FIG. 8A, a UE may receive a PDCCH order at any timing. In this case, the UE needs to constantly monitor a PDCCH even when an SCell is deactivated.

As shown in FIG. 8B, the UE may receive a PDCCH order at specific timing. In this case, the UE only needs to monitor a PDCCH in a given specific time duration. A duration in which monitoring is performed/duration in which monitoring is not performed may be determined in a specification in advance or may be configured/indicated by RRC/MAC CE/DCI. The given specific time duration may be any of the same as a DRX duration (On duration of DRX), some parts of the DRX duration, and a duration including the DRX duration.

According to option 1, a UE can appropriately determine in which cell a PDCCH order of a candidate cell is transmitted, in a RACH procedure.

### <Option 2>

Option 2 relates to a case where a PDCCH order transmitted on given cell #A to a UE triggers a PRACH on another cell #B different from this cell #A. Cells #A and #B may belong to the same MCG/SCG or may belong to the same TAG.

### {Option 2-0}

In this option, for a UE, a RACH may be triggered based on at least one of the following options.

### {Option 2-0-1}

Any active serving cell (cell #A) may trigger a RACH for a candidate cell (cell #B (which may be another serving cell)).

### {Option 2-0-2}

Only cell #A being an SPCell may trigger a RACH for a candidate cell (cell #B).

### {Option 2-0-3}

Only an (activated) scheduling cell (cell #A) may trigger a RACH for a scheduled cell (cell #B) associated with this cell #A. The association of cells #A and #B (for example, based on cross-carrier scheduling) may be configured/indicated by RRC.

For the scheduling cell (cell #A), the maximum number of scheduling cells may be defined.

Assume that a scheduled cell ID is indicated by a new carrier indicator field (CIF) in a PDCCH order. In this case, a CIF value used in the PDCCH order may be explicitly configured for one scheduled cell (cell #B) via RRC, and a plurality of CIF values used in PDCCH orders for a plurality of scheduled cells may be implicitly determined based on the order of cell indices/PCIs of the plurality of scheduled cells. In the implicit case, a low cell index/PCI may be mapped to a small CIF value, for example.

### {Option 2-0-4}

Cell #A that can trigger a RACH (for each TAG) may be explicitly/implicitly configured by RRC/MAC CE or may be defined in a specification in advance. For example, a cell with the lowest cell ID per TAG/CG (cell group) or an active cell with the lowest cell ID per TAG/CG (cell group) may be this cell #A (cell that can trigger a RACH).

According to embodiment 2-0, a UE does not need to monitor a PDCCH order in a deactivated cell/many cells. In this case, PRACH transmission in a deactivated cell/deactivated candidate cell may be supported.

To indicate a target cell of a PRACH, a target cell ID/BWP ID/frequency may be indicated by DCI including a PDCCH order.

An NW can indicate a plurality of target cells by the DCI including a PDCCH order. The UE may select one cell to trigger a RACH, based on the DCI.

In the present disclosure, a PDCCH order may also be included in (applied to) another DCI format such as DCI format 1_1, 1_2, or 2_X, without being limited to DCI format 1_0.

### {Option 2-1}

In a case where there is a random access procedure in progress triggered by a given PDCCH order, even when a UE receives another PDCCH order indicating the same target cell ID/BWP ID/center frequency/random access preamble/PRACH mask index/UL carrier, the procedure is regarded as the same random access procedure as that in progress and is not reinitialized.

According to option 2, a UE can appropriately determine triggering of a RACH by a PDCCH order of a candidate cell, based on a new rule.

### (Issues)

As described above, sufficient study is not performed about how to perform, in a RACH procedure for each TRP (or TRP TA) in multi-TRP, the RACH procedure. Specifically, a plurality of issues below are assumed.

### <Issue 1>

For example, it is not clear in which cell a UE triggers a RAR when a RACH for a candidate cell is triggered and a PRACH is transmitted in the candidate cell. In addition, it is not clear about QCL assumption of a CORESET for monitoring a RAR. In this case, an activated SCell/deactivated (inactive) SCell is also a monitoring-target candidate cell.

### <Issue 2>

For example, for the purpose of reduction of delay/suspension of handover, it is agreed that a UE performs the following procedures in a candidate cell before reception of an L1/L2 cell switching command:
- DL synchronization for the candidate cell
- TRS tracking for the candidate cell
- CSI acquisition for the candidate cell
- activation/selection of a TCI state for the candidate cell

It is studied whether it is possible to perform the above procedure also when a candidate cell is a deactivated SCell.

However, in consideration of an inter-distribution-unit (DU) scenario, it is assumed that the UE cannot perform some of the procedures on the candidate cell before reception of a cell switching command. For example, it is assumed that the UE performs some of the procedures only after reception of a cell switching command. In this case, how to make notification of and control operation of the UE for these functions/procedures in the candidate cell is an issue.

Hence, the inventors of the present invention focused on a case where a RACH is triggered, studied a RACH procedure in such a case, and came up with the idea of one aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information (one or a plurality of spatial relation information)," and the like. The TCI state and the TCI may be interchangeably interpreted.

In the present disclosure, a TRP, a CORESET pool index (CORESETPoolIndex), a TRP ID, an ID related to a TRP, a TAG ID, a TCI state group, a spatial relation group, a QCL source RS group, a DL RS group, a pathloss RS group, and a PCI (for inter-cell multi-TRP) may be interchangeably interpreted.

In the present disclosure, being associated with different TRPs, being associated with different CORESET pool indices (CORESETPoolIndex), being associated with different TRP IDs, being associated with IDs related to different TRPs, being associated with different TAG IDs, being associated with different TCI state groups, being associated with different spatial relation groups, being associated with different QCL source RS groups, being associated with different DL RS groups, being associated with different pathloss RS groups, and being associated with different PCIs (for inter-cell multi-TRP) may be interchangeably interpreted.

Each embodiment of the present disclosure may be applied to at least one of intra-cell multi-TRP and inter-cell multi-TRP.

In the present disclosure, intra-cell multi-TRP may mean that activated TCI states of a plurality of (for example, two) TRPs are associated with the same PCI.

In the present disclosure, inter-cell multi-TRP may mean that activated TCI states of a plurality of (for example, two) TRPs are associated with different PCIs.

In the present disclosure, in a case of inter-cell multi-TRP, a plurality of (for example, two) TRPs may mean a plurality of (for example, two) TRPs are associated with a plurality of (for example, two) PCIs.

In the present disclosure, a non-serving cell, an additional cell, a candidate cell, and a target cell may be interchangeably interpreted.

The following embodiments may be applied to a case where a RACH procedure for each TRP (or for each serving cell/additional cell/non-serving cell) is configured/supported. Alternatively, the following embodiments may be applied to a case where a timing advance/timing advance group for each TRP (or for each serving cell/additional cell/non-serving cell) is configured/supported.

### (Radio Communication Method)

### <First Embodiment>

This embodiment relates to issue 1. In the present embodiment, at least one of the following aspects may be employed. The aspects may each be employed individually, or may be employed in combination.

### {Aspect 1-1}

A UE may perform a RACH procedure by using an existing rule defined for a RACH of a PDCCH order in an SCell. The QCL of a RAR in an SpCell may be associated with a Type 1-PDCCH CSS set as will be described later.

Specifically, when the UE performs detection of DCI format 1_0 CRC-scrambled with a corresponding RA-RNTI in response to PRACH transmission initiated by a PDDCCH order triggering a CFRA procedure for an SCell or a candidate cell, the UE may assume DMRS antenna port quasi-co-location properties of the CORESET associated with a Type 1-PDCCH CSS set for reception of a PDCCH including DCI format 1_0.

The procedure may be applied only to a RACH of a PDCCH order in a candidate cell.

### {Aspect 1-2}

A RACH may be triggered, and a UE may monitor a RAR in a candidate cell in which a PRACH is transmitted. To support this operation, a configuration of a Type 1-PDCCH CSS set for each candidate cell may be provided in configuration of candidate cells by RRC.

The UE may assume that quasi co-location properties of a DMRS antenna port of a CORESET associated with a Type 1-PDCCH CSS set in a candidate cell are the same as that of an SSB/CSI-RS resource used by the UE for association of a PRACH in the candidate cell.

The procedure may be applied to a CBRA procedure for a candidate cell, for example, when the UE triggers a CBRA procedure for a candidate cell. The procedure may be applied only to an activated/deactivated candidate cell.

### {Aspect 1-3}

A UE may monitor a RAR in a cell in which a PDCCH order is transmitted. In this case, the QCL of the RAR may be associated with the QCL of the PDCCH order.

### {Aspect 1-4}

A UE may monitor a RAR in some cells configured in advance for monitoring a RAR. The cell may be configured with a Type 1-PDCCH CSS set.

### {Aspect 1-5}

A UE need not monitor a RAR.

For example, it is not clear whether a UE can know when (or for which candidate cell), after transmission of a PRACH triggered by a PDCCH order, monitoring of a RAR is necessary or monitoring of a RAR is not necessary (issue 1-1).

### <Aspect 1-5-1>

Whether or not monitoring of a RAR for a candidate cell is necessary may be explicitly indicated in a PDCCH order.

The PDCCH order may include 1-bit information indicating whether or not the UE needs to monitor a RAR.

For example, when RACHs for a plurality of candidate cells are triggered by one PDCCH order, information that can be expressed by one bit or separate bits may be used to indicate whether or not monitoring of a RAR is necessary for an indicated candidate cell.

Display for the RAR monitoring above may be configured for/indicated to each candidate cell/cell group/TAG by RRC/MAC CE.

### <Aspect 1-5-2>

Whether or not monitoring of a RAR for a candidate cell is necessary may be defined in a specification in advance or may be configured by higher layer signaling.

When the candidate cell is an activated SCell, monitoring of a RAR may be needed in the candidate cell.

When an SCell is deactivated, monitoring of a RAR may be needed in the candidate cell, and when an SCell is activated, monitoring of a RAR may not be needed.

When the candidate cell is not an SCell, monitoring of a RAR may not be needed in the candidate cell, and when the candidate cell is an SCell, monitoring of a RAR may be needed in the candidate cell.

### {Aspect 1-6}

UE operation in a case where a RACH procedure is triggered for a candidate cell and it is indicated/predefined that monitoring of a RAR is not needed in the candidate cell may be defined as below.

Preamble transmission of a PRACH (PRACH occasion (RO) and preamble selection) may follow existing operation and may have a difference as that below.

For PREAMBLE_POWER_RAMPING_COUNTER:
Opt 1: it is incremented only by 1 (same as a case where RAR monitoring is needed)
Opt 2: it is made with no change
Opt 3: it is configured at 0

For PREAMBLE_RECEIVED_TARGET_POWER:
Opt 1: PREAMBLE_RECEIVED_TARGET_POWER is configured at preambleReceivedTargetPower + DELTA_PREAMBLE + (PREAMBLE_POWER_RAMPING_COUNTER - 1) × PREAMBLE_POWER_RAMPING_STEP + POWER_OFFSET_2STEP_RA (same as a case where RAR monitoring is needed)
Opt 2: power ramping is not performed

A RAR window is not started.

### {Aspect 1-7}

PRACH transmission in a case of not performing RAR monitoring above may be operation different from that of an existing random access procedure. Existing specifications (1) and (2) to be described below need not be applied to PRACH transmission of a case where monitoring of a RAR is not performed.

Existing Specification in TS38.321
(1) When a new random access procedure is triggered while another random access procedure is already in progress in a MAC entity, whether to continue the procedure in progress or initiate the new procedure (SI request or the like) may depend on UE implementation.
(2) When there is a random access procedure in progress triggered by a PDCCH order while a UE receives another PDCCH order indicating the same random access preamble, PRACH mask index, and UL carrier, the procedure is regarded as the same random access procedure as that in progress and is not reinitialized.

When there is a random access procedure in progress in a MAC entity and random access in which monitoring of a RAR is not performed is triggered, for example, by a PDCCH order, the UE may continue the procedure in progress and perform PRACH transmission in which monitoring of a RAR is not performed.

When a UE receives a new PDCCH order for transmitting a PRACH immediately after receiving an old PDCCH order for transmitting a PRACH (even before the UE transmits a PRACH for the old PDCCH order, even if these two PDCCH orders indicate the same preamble, mask index, and UL carrier), the UE may follow the two PDCCH orders and transmit two PRACHs accordingly.

According to the first embodiment described above, a UE can appropriately perform a RACH procedure by a PDCCH order of a candidate cell.

### <Second Embodiment>

This embodiment relates to issue 2. In the present embodiment, at least one of the following aspects may be employed. The aspects may each be employed individually, or may be employed in combination.

Before a UE receives a cell switching command, a new parameter related to performing of a specific function/procedure may be introduced.

The new parameter may be a parameter indicating whether or not it is possible to perform the specific function/procedure. The new parameter may be configured for each candidate cell by RRC signaling when configurations of a plurality of candidate cells are provided to the UE.

### {Aspect 2-1}

For example, the new parameter may indicate whether or not it is possible to perform the specific function/procedure, by 1-bit information (0 or 1) (option 1). When "1" is indicated in the field of the new parameter, the UE may perform (may assume that is possible to perform) a set of functions/procedures defined/configured in advance, before reception of a cell switching command. When "0" is indicated in the field of the new parameter, the UE need not perform (may assume that it is not possible to perform) a set of functions/procedures defined/configured in advance, before reception of a cell switching command.

To indicate a different set of functions/procedures, another new parameter may be defined (option 2). To define the other new parameter (indicate the different function/procedure), information of a different bit is needed.

The other new parameter (which may be referred to simply as a parameter) may indicate that each candidate cell and a current serving cell are in (belong to) a distributed node (for example, Distributed Unit (DU))/central node (Central Unit (CU)), or different DUs/CUs. With this parameter, it is possible to indicate to the UE whether or not it is possible to perform the specific procedure before reception of a cell switching command.

For example, when "0" is configured in the field of the parameter for a candidate cell, the UE need not assume that signaling from an NW triggers unexpected functions/procedures for the candidate cell, or the UE may ignore triggering of the functions/procedures even if the UE has received signaling from the NW.

For example, the field of the parameter being "0" may indicate (mean) that "CSI acquisition for a candidate cell is not permitted before reception of a cell switching command." In this case, if a configuration of CSI measurement by RRC includes the candidate cell indicated by "0" in the field of the parameter, the UE may ignore the CSI measurement/CSI reporting for the candidate cell.

Predefined/preconfigured functions/procedures in each set may include at least one of the following:
- DL synchronization for a candidate cell
- TRS tracking for a candidate cell
- acquisition of an L1 beam or CSI acquisition for a candidate cell (result of periodic, semi-persistent, or aperiodic CSI-RS measurement in a candidate cell)
- activation/selection of a TCI state for the candidate cell
- PRACH transmission in a candidate cell
- SRS transmission in a candidate cell
- monitoring of a PDCCH (corresponding to a specific format or CORESET/SS) in a candidate cell

As a variation, RRC/MAC CE may select at least one of predefined/preconfigured functions/procedures. DCI/MAC CE may indicate/activate whether to apply the selected set of functions/procedures to each candidate cell. For example, DCI including a PDCCH order may be used for the indication. Which candidate cell is explicitly indicated may be indicated by RRC/MAC CE/DCI or may be implicitly associated with a candidate cell for a triggered PRACH.

### {Aspect 2-2}

When the UE has received a cell switching command by using DCI/MAC CE, a set of predefined/preconfigured functions/procedures/RSs may be triggered or activated for an indicated target cell. The target cell may be a candidate cell.

For example, if a cell switching command is a command for the target cell, the UE may assume that the functions/procedures/RSs indicated by "0" in the field of the new parameter above (note that the configurations thereof are provided by RRC) are triggered/activated for the target cell. In this case, the configurations of the functions/procedures/RSs indicated by "0" in the field of the new parameter may be provided by RRC.

When a cell switching command is transmitted from the NW to the UE, explicit indication for triggering/activating a set of some functions/procedures/RSs may be included in the cell switching command.

For example, to reduce the latency of data transmission in the target cell after the UE has received the cell switching command, a function(s) /procedure(s) necessary for the data transmission needs to be performed as early as possible if the function(s)/procedure(s) is not performed before the cell switching command.

Contents of an existing MAC CE may include at least one of the following as a new cell switching command to trigger some functions/procedures:
- activation/deactivation of an SCell/candidate cell
- aperiodic CSI trigger state for a target cell
- activation of an aperiodic CSI-RS/Channel State Information-Interference Measurement (CSI-IM) resource set for a target cell
- activation of a TCI state for PDCCH/PDSCH for a target cell
- timing advance command (TA command) for a target cell

Some existing DCI indications may include at least one of the following as a new cell switching command to trigger some functions/procedures:
- PDCCH order for triggering a RACH for a target cell
- indication for triggering aperiodic CSI reporting for a target cell

As other new indications, at least one of the following may be included:
- higher layer triggering a RACH when a configuration of a CFRA/CBRA PRACH is enabled
- activation of a configuration related to L1/CSI measurement/reporting

According to the second embodiment described above, a UE can appropriately control a specific function(s)/procedure(s) in a RACH procedure, based on a new parameter or the like.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information for at least one of the embodiments above
- supporting two TAs for multi-TRP
- supporting two TAs for intra-cell multi-TRP (for example, intra-cell M-TRP)
- supporting two TAs for inter-cell multi-TRP (for example, inter-cell M-TRP)
- supporting L1/L2 inter-cell mobility
- supporting PDCCH monitoring of a candidate cell/deactivated candidate cell/deactivated SCell
- supporting the maximum number of cells/TAGs/reference CCs targeted for PDCCH monitoring
- supporting a cross-carrier (cross-CC) PDCCH order
- supporting monitoring of a RAR for a candidate cell in the candidate cell/SpCell/SCell
- supporting the maximum number of candidate cells/SpCells/SCells targeted for PDCCH monitoring
- supporting performing of a set of specific functions/procedures in a candidate cell (or a deactivated cell) before reception of an L1/L2 cell switching command and supporting the maximum number of such cells

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of 8TX UL transmission, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives a downlink control channel (PDCCH) order to be used for triggering a random access procedure, from a candidate cell; and
a control section that determines a cell in which a random access channel (PRACH) is transmitted, based on the PDCCH order.

### {Supplementary Note 2}

The terminal according to supplementary note 1, wherein the receiving section monitors a random access response in a candidate cell in which the random access channel is transmitted or a cell in which the PDCCH order is transmitted.

### {Supplementary Note 3}

The terminal according to supplementary note 1 or 2, wherein the control section assumes that quasi co-location specification associated with a Type 1-PDCCH CSS set in the candidate cell is same as that of a reference signal resource used for association of the PRACH.

### {Supplementary Note 4}

The terminal according to any one of supplementary notes 1 to 3, wherein the PDCCH order includes information related to whether or not monitoring of a random access response for a given cell is needed.

### (Supplementary Notes)

Regarding one embodiment of the present disclosure, the following supplementary notes of the invention will be given.

### {Supplementary Note 1}

A terminal including:
a receiving section that receives a switching command for a candidate cell; and
a control section that controls performance of a specific function for the candidate cell before reception of the switching command, wherein
the control section performs the specific function, based on a parameter indicating whether or not it is possible to perform the specific function.

### {Supplementary Note 2}

The terminal according to supplementary note 1, wherein the parameter is configured or indicated by higher layer signaling or a MAC control element.

### {Supplementary Note 3}

The terminal according to supplementary note 1 or 2, wherein the specific function includes a specific operation predefined for a candidate cell.

### {Supplementary Note 4}

The terminal according to any one of supplementary notes 1 to 3, wherein
the switching command for the candidate cell includes information for triggering a specific function for a target cell, and
the control section performs the specific function, based on the information.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

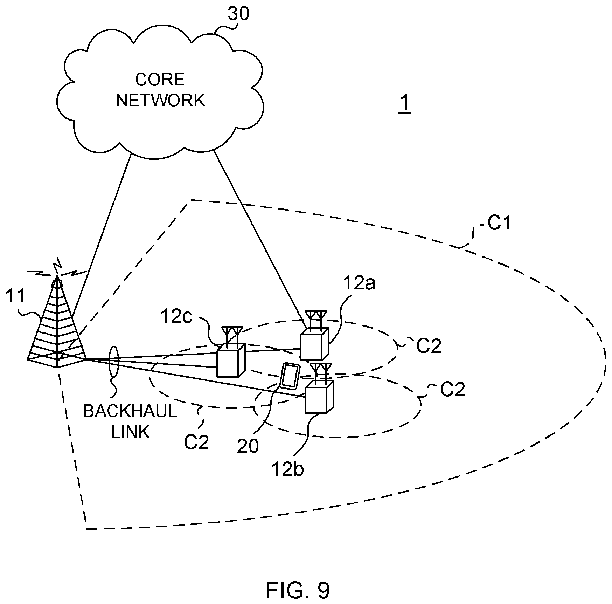

FIG. 9 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

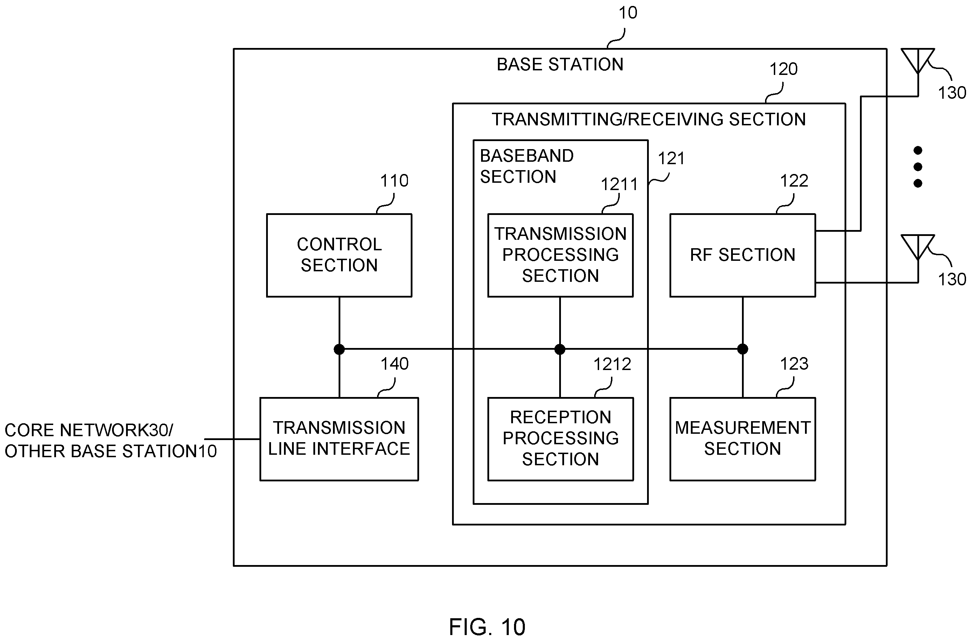

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a downlink control channel (PDCCH) order to be used for triggering a random access procedure, from a candidate cell to a terminal. The transmitting/receiving section 120 may transmit a switching command for a candidate cell, to a terminal.

The control section 110 may determine a cell in which a random access channel (PRACH) is transmitted from the terminal, based on the PDCCH order. The control section 110 may control configuration of a parameter indicating whether or not it is possible to perform a specific function for the candidate cell before reception of the switching command.

### (User Terminal)

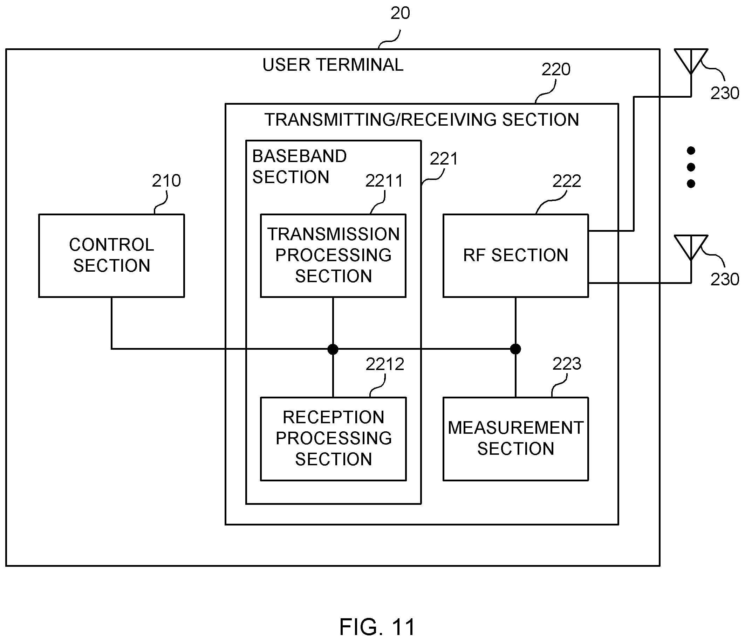

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a downlink control channel (PDCCH) order to be used for triggering a random access procedure, from a candidate cell. The transmitting/receiving section 220 may monitor a random access response in a candidate cell in which the random access channel is transmitted or a cell in which the PDCCH order is transmitted. The PDCCH order may include information related to whether or not monitoring of a random access response for a given cell is needed.

The control section 210 may determine a cell in which a random access channel (PRACH) is transmitted, based on the PDCCH order. The control section 210 may assume that quasi co-location specification associated with a Type 1-PDCCH CSS set in the candidate cell is the same as that of a reference signal resource used for association of the PRACH. The control section 210 may control performance of a specific function for the candidate cell before reception of the switching command. The control section 210 may control performance of the specific function, based on a parameter indicating whether or not it is possible to perform the function. The parameter may be configured or indicated by higher layer signaling or a MAC control element. The specific function may include a specific operation predefined for a candidate cell. The switching command for the candidate cell may include information for triggering a specific function for a target cell. The control section 210 may perform the specific function, based on the information for triggering the specific function for the target cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

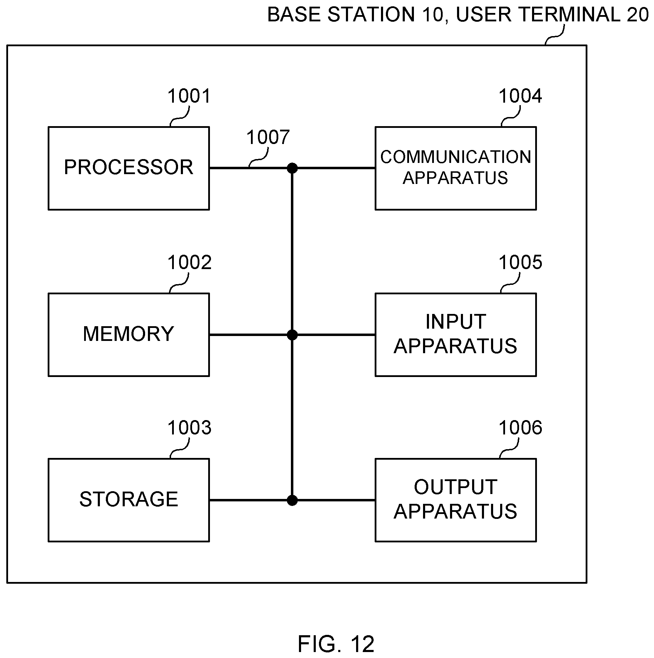

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (these hardware).

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

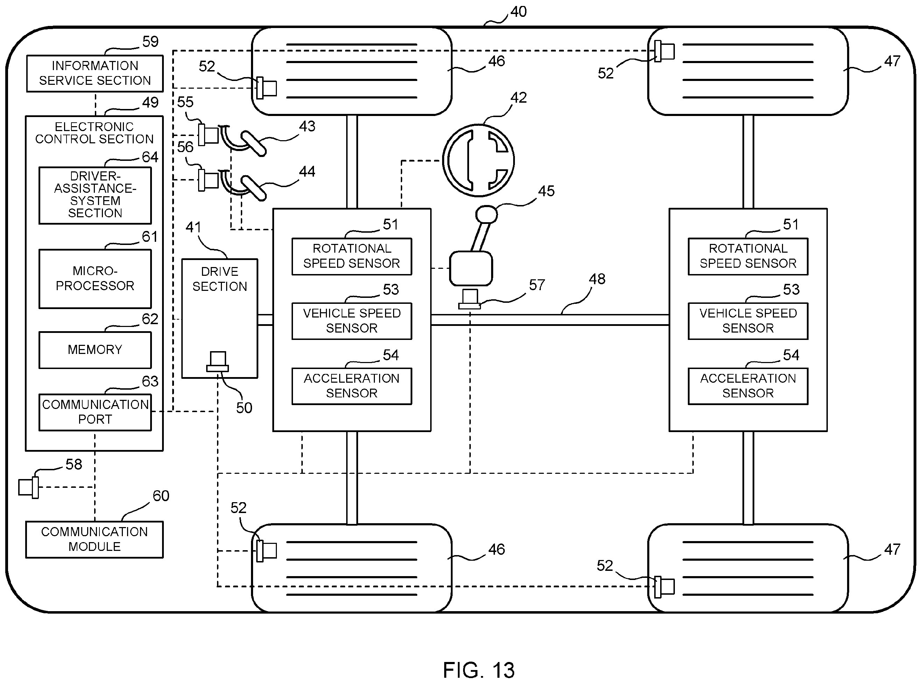

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (various information/services) (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-181915, filed on November 14, 2022, the contents of which are incorporated herein by reference in their entirety.

## Claims

1. A terminal comprising:
a receiving section that receives a downlink control channel (PDCCH) order to be used for triggering a random access procedure, from a candidate cell; and
a control section that determines a cell in which a random access channel (PRACH) is transmitted, based on the PDCCH order.

2. The terminal according to claim 1, wherein
the receiving section monitors a random access response in a candidate cell in which the random access channel is transmitted or a cell in which the PDCCH order is transmitted.

3. The terminal according to claim 1, wherein
the control section assumes that quasi co-location specification associated with a Type 1-PDCCH CSS set in the candidate cell is same as that of a reference signal resource used for association of the PRACH.

4. The terminal according to claim 1, wherein
the PDCCH order includes information related to whether or not monitoring of a random access response for a given cell is needed.

5. A radio communication method for a terminal, the radio communication method comprising:
receiving a downlink control channel (PDCCH) order to be used for triggering a random access procedure, from a candidate cell;
and
determining a cell in which a random access channel (PRACH) is transmitted, based on the PDCCH order.

6. A base station comprising:
a transmitting section that transmits a downlink control channel (PDCCH) order to be used for triggering a random access procedure, from a candidate cell to a terminal; and
a control section that determines a cell in which a random access channel (PRACH) is transmitted from the terminal, based on the PDCCH order.
